# EUROPÄISCHE PATENTSCHRIFT

(11) **EP 0 992 421 B1**
(45) Veröffentlichungstag und Bekanntmachung des Hinweises auf die Patenterteilung: **27.04.2005**
(21) Anmeldenummer: 99117692.6
(22) Anmeldetag: 08.09.1999
(51) Int. Cl.: B62D 55/24, A63H 17/14

(54) **Raupenband für Spielfahrzeuge**
Flexible endless track for vehicle toy
Chenille flexible sans fin pour véhicule jouet

(30) Priorität: 10.10.1998 DE 29818131 U
(43) Veröffentlichungstag der Anmeldung: 12.04.2000
(73) Patentinhaber: Geobra Brandstätter GmbH & Co. KG, D-90513 Zirndorf (DE)
(72) Erfinder: Beck, Matthias, 90522 Oberasbach (DE)
(74) Vertreter: Rau, Manfred, Dr. Dipl.-Ing.

(56) Entgegenhaltungen:
- EP-A- 0 428 725
- EP-A- 0 495 122
- EP-A- 0 754 614
- DE-A- 3 920 201

## Beschreibung

Die Erfindung betrifft ein Raupenband für Spiel-Fahrzeuge gemäß den im Oberbegriff des Anspruchs 1 angegebenen Merkmalen.

Ein Raupenband mit den Merkmalen des Oberbegriffs des Anspruchs 1, welches für Bagger bestimmt ist, ist in der EP 0 428 725 A1 beschrieben. Dort sind Platten mit Führungsvorsprüngen in ein Endlos-Band aus Gumm eingebettet. Der Konstruktionsaufwand für ein derartiges Raupenband ist beträchtlich.

Weitere Raupenbänder für Bagger und Straßenfahrzeuge sind bekannt aus der EP 0 495 122 A1, der EP 0 754 614 A1 sowie der DE 39 20 201 A1. Auch diese Raupenbänder werden mit erheblichem Konstruktionsaufwand hergestellt, der für Spiel-Fahrzeuge nicht tolerabel ist.

Ein Raupenband für Spiel-Fahrzeuge ist als ein aus einem weich-elastischen Grundmaterial bestehendes Endlos-Band bekannt, das auf eine Räderanordnung von Raupen- und Amphibienfahrzeugen, insbesondere Baggerladern, aufgezogen wird. Diese Räderanordnung umfaßt mindestens zwei Umlenkräder und weitere Führungsräder. An der den Rädern zugewandten Innenfläche des Raupenbandes ist eine Vielzahl von Führungsvorsprüngen ebenfalls aus dem weich-elastischen Grundmaterial einstückig mit dem Raupenband ausgebildet. Diese Führungsvorsprünge greifen jeweils in eine in jedem der vom Raupenband umschlungenen Räder des Raupenfahrzeugs vorgesehene Führungsnut ein, um beim Abrollen der Räder auf dem Raupenband eine Querführung des Raupenbandes bezüglich der Räder zu gewährleisten und einen Widerstand gegen das seitliche Abgleiten des Raupenbandes von den Rädern zu bilden. Jedoch ist dieser Abgleit-Widerstand beim bekannten Raupenband nicht groß genug, da das Raupenband häufig von den Rädern abrutscht. Daher ist es Aufgabe der Erfindung, ein Raupenband für Spiel-Fahrzeuge derart zu gestalten, daß eine sichere Führung des Raupenbandes auf den Rädern gewährleistet sowie ein Abgleiten von den Rädern verhindert wird.

Diese Aufgabe wird durch die im Kennzeichnungsteil des Anspruchs 1 angegebenen Merkmale gelöst. Durch die Auswahl eines steiferen Materials für die Führungsvorsprünge wird deren Verbiegbarkeit quer zur Längsrichtung und somit der Widerstand gegen das Abgleiten des Raupenbandes von den Rädern vergrößert. Dadurch, daß die Führungsvorsprünge einstückig

mit jeweils einer Platte quer zur Längsrichtung ausgebildet sind, wird erreicht, daß auch eine Querverbiegung der Führungsvorsprünge am Führungsvorsprungsgrund vermieden wird, wodurch eine noch sicherere Querführung des Raupenbandes gewährleistet wird. Erfindungsgemäß wird ein Raupenband geschaffen, das keine zusätzlichen Substanzen, wie z. B. Klebstoffe, für die Befestigung der Platten an dem Endlos-Band aufweist. Durch ein 2-Komponenten-Spritzgießverfahren wird eine solche unmittelbare Befestigung realisiert, bei der im Gegensatz zu den herkömmlichen Klebemethoden zweier unterschiedlicher Kunststoffmaterialien keine Haftmängel auftreten. Insbesondere ist ein solches Verfahren sehr einfach.

Durch die Weiterbildungen nach den Ansprüchen 2 und 3 wird die Biegesteifigkeit des Raupenbandes in seiner Längsrichtung sowie dessen Torsionsfestigkeit vergrößert.

Durch die Weiterbildungen nach den Ansprüchen 4 und 5 wird ein Raupenband geschaffen, das aus einer Vielzahl von nebeneinander angeordneten Gelenkplatteneinheiten besteht. Diese Gelenkplatteneinheit weist einen bevorzugten Freiheitsgrad auf, durch den die funktionserforderliche Biegbarkeit des Raupenbandes quer zu seiner Längsrichtung zugelassen wird, während die Biegesteifigkeit des Raupenbandes in Längsrichtung sowie dessen Torsionssteifigkeit stark erhöht werden. Auf diese Weise erreicht das erfindungsgemäße Raupenband eine ähnliche Funktionsweise wie die in der Großtechnik eingesetzte Raupenkette eines Raupenfahrzeugs, die im wesentlichen auch aus einer Vielzahl von durch Gelenke verbundenen starren Plattengliedern besteht. Die nach der Erfindung eingesetzten Mittel sind jedoch völlig anders.

Die erfindungsgemäße Ausgestaltung führt in der Weiterbildung nach dem Anspruch 6 dazu, daß Profilrippen das weich-elastische Endlos-Band dort vor Verschleißschäden schützen, wo die harten sowie nicht unwesentlich scharfen Plattenlängskanten in das weiche Endlos-Band drücken.

Weitere Vorteile, Merkmale und Einzelheiten der Erfindung sind der folgenden Beschreibung einer Ausführungsform anhand der Zeichnungen zu entnehmen. Es zeigt:
- Fig. 1: eine perspektivische Darstellung eines Raupenbandes;
- Fig. 2: eine Querschnittsdarstellung gemäß der Schnittlinie II-II in Fig. 1 und
- Fig. 3: eine Seitenansicht eines Teilabschnitts des Raupenbandes gemäß dem Sichtpfeil III in Fig. 1.

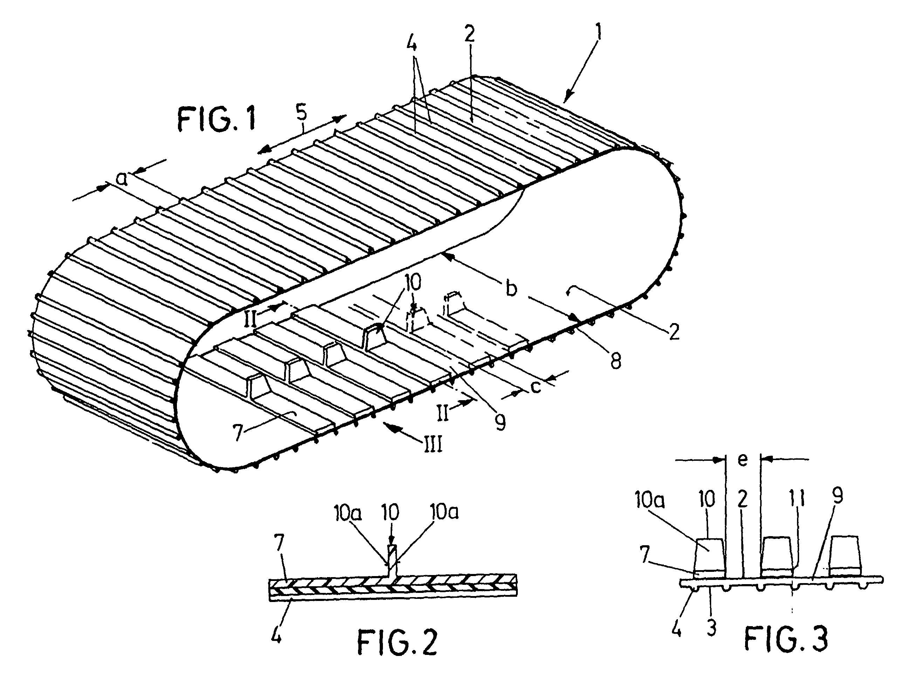

Fig. 1 zeigt ein Raupenband mit einem Endlos-Band 1 als Grundkörper, das auf einer nicht dargestellten Räderanordnung aus Umlenkrädern, Führungsrädem u.dgl. montiert ist. Das Endlos-Band 1 weist eine Innenfläche 2 sowie eine Außenfläche 3 auf und besteht aus einem weich-elastischen Grundmaterial. Als Grundmaterialien werden bekannte weich-elastische gummiartige Kunststoffe verwendet, bei denen eine besonders gute Reibung zwischen der Außenfläche 3 des Raupenbandes und dem zu befahrenden nicht gezeigten Boden auftritt.

An der Außenfläche 3 ist ein Raupenband-Profil in Form von Profilrippen 4 angeformt, die sich senkrecht zur Längsrichtung 5 des Endlos-Bandes 1 über dessen gesamte Breite b erstrecken. Der Abstand a der Profilrippen 4 voneinander ist über die gesamte Außenfläche 3 des Endlos-Bandes 1 jeweils gleich groß. Der Querschnitt einer Profilrippe 4 ist halbkreisförmig oder keilförmig mit einer abgerundeten Spitze.

An der Innenfläche 2 des Endlos-Bandes 1 sind senkrecht zu dessen Längsrichtung 5 Platten 7 aus einem Material angeordnet, das gegenüber dem Grundmaterial eine höhere Steifigkeit aufweist. Als Grundmaterial kommt TPE, also ein thermoplastisches Elastomer, und als Material der Platten 7 PP, also Polypropylen, in Betracht. Die Platten 7 erstrecken sich über die gesamte Breite b des Endlos-Bandes 1 und weisen eine Breite c auf, die von der Außenkante 8 bis zur Mitte des Endlos-Bandes leicht zunimmt. Benachbarte Platten 7 werden mit einem Gelenkabschnitt 9 verbunden, der durch das aus dem weich-elastischen Grundmaterial bestehenden Endlos-Band 1 gebildet ist und über das gesamte Raupenband die gleiche Breite a aufweist.

Von der Mitte der Innenfläche 2 des Endlos-Bandes 1 und senkrecht zu dieser erstrecken sich Führungsvorsprünge 10 mit trapezförmigem Querschnitt sowie in Längsrichtung 5 zueinander parallelen Führungsflächen 10a, wobei jeweils ein Führungsvorsprung 10 einstückig mit jeweils einer Platte 7 ausgebildet ist. Die Führungsvorsprünge 10 sind miteinander fluchtend in einer endlosen Reihe angeordnet. Die Profilrippen 4 sind fluchtend mit den Kanten 11 der Platten 7 angeordnet.

Der Abstand e benachbarter Führungsvorsprünge 10 voneinander, der auch der Breite a des Gelenkabschnitts 9 entspricht, ist im wesentlichen gleich der Breite c der Platten 7. Auf diese Weise bildet das Raupenband eine Aufeinanderfolge von harten Platten 7 und weichen Gelenkabschnitten 9. Durch die Anordnung sowie die Form der Führungsvorsprünge 10 wird einerseits ein problemloses Eingreifen letzterer in Führungsnuten der Umlenkräder und andererseits erreicht, daß sich die Führungsvorsprünge 8 nicht gegenseitig behindern, wenn das Raupenband an den Rädern umgelenkt wird.

## Patentansprüche

1. Raupenband für Spiel-Fahrzeuge mit:
- einem Endlos-Band (1) aus einem weich-elastischen Grundmaterial, an dessen Innnenfläche (2) mehrere in Längsrichtung (5) des Endlos-Bandes (1) hintereinander angeordnete Führungsvorsprünge (10) ausgebildet sind, wobei
- die Führungsvorsprünge (10) aus einem Material gebildet sind, das gegenüber dem Grundmaterial eine höhere Steifigkeit aufweist,
- die Führungsvorsprünge (10) jeweils mit einer an der Innenfläche (2) und quer zur Längsrichtung (5) angeordneten Platte (7) versehen sind, die aus einem Material mit einer gegenüber dem Grundmaterial höheren Steifigkeit gebildet ist,
- jeweils ein Führungsvorsprung (10) einstückig mit jeweils einer Platte (7) ausgebildet ist, **dadurch gekennzeichnet, daß**
- die Platten (7) unmittelbar durch Direktbindung des Materials mit dem Grundmaterial an dem Endlos-Band (1) durch ein 2-Komponenten-Spritzgießverfahren befestigt sind.

2. Raupenband nach Anspruch 1, **dadurch gekennzeichnet, daß** sich die Platten (7) über zumindest die Hälfte der Breite b des Raupenbandes senkrecht zur Längsrichtung (5) des Endlos-Bandes (1) erstrecken.

3. Raupenband nach Anspruch 1 oder 2, **dadurch gekennzeichnet, daß** sich die Platten (7) über die gesamte Breite b senkrecht zur Längsrichtung (5) des Endlos-Bandes (1) erstrecken.

4. Raupenband nach einem der Ansprüche 1 bis 3, **dadurch gekennzeichnet, daß** benachbarte Platten (7) parallel zueinander mit gleichem Abstand e voneinander angeordnet und durch einen weich-elastischen Gelenkabschnitt (9) miteinander verbunden sind.

5. Raupenband nach Anspruch 4, **dadurch gekennzeichnet, daß** der Abstand e des Gelenkabschnitts (9) mindestens einer halben Breite c einer Platte (7) am Führungsvorsprungsgrund (10) entspricht.

6. Raupenband nach einem der Ansprüche 1 bis 5, **dadurch gekennzeichnet, daß** das Endlos-Band (1) an seiner Außenfläche (3) Profilrippen (4) aufweist, die sich über die Breite b sowie senkrecht zur Längsrichtung (5) des Endlos-Bandes (1) erstrecken, wobei eine Profilrippe (4) einer Kante (11) einer Platte (7) zugeordnet ist.

7. Raupenband nach Anspruch 6, **dadurch gekennzeichnet, daß** der Abstand a benachbarter Profilrippen (4) gleich dem Abstand e benachbarter Platten (7) ist.

## Claims

1. Caterpillar track for toy vehicles with:
- an endless belt (1) of a flexible elastic basic material on whose internal surface (2) are formed a plurality of guide projections (10) arranged in succession in the longitudinal direction (5) of the endless belt (1), wherein
- the guide projections (10) are formed from a material which is stiffer than the basic material,
- the guide projections (10) are provided in each case with a plate (7) which is arranged on the internal surface (2) and transversely to the longitudinal direction (5) and is formed from a material which is stiffer than the basic material,
- a respective guide projection (10) is formed integrally with a respective plate (7), **characterized in that**
- the plates (7) are fastened to the endless belt (1) directly by direct bonding of the material with the basic material by a two-component injection moulding process.

2. Caterpillar track according to claim 1, **characterized in that** the plates (7) extend over at least half of the width b of the caterpillar track perpendicularly to the longitudinal direction (5) of the endless belt (1).

3. Caterpillar track according to one of claims 1 or 2, **characterized in that** the plates (7) extend over the entire width b perpendicularly to the longitudinal direction (5) of the endless belt (1).

4. Caterpillar track according to one of claims 1 to 3, **characterized in that** adjacent plates (7) are arranged parallel to one another at an equal distance e from one another and are connected to one another by a flexible elastic articulating portion.

5. Caterpillar track according to claim 4, **characterized in that** the distance e of the adjacent plates (7) corresponds to at least half the width c of a plate (7) measured at its guide projection (10).

6. Caterpillar track according to one of claims 1 to 5, **characterized in that** the endless belt (1) has, on its external surface (3), tread ribs (4) which extend over the width b and perpendicularly to the longitudinal direction (5) of the endless belt (1), a tread rib (4) being associated with an edge (11) of the plate (7).

7. Caterpillar track according to claim 6, **characterized in that** the distance a between adjacent tread ribs (4) is equal to the distance e between adjacent plates (7).

## Revendications

1. Chenille pour véhicule jouet comprenant :
- une bande sans fin (1) en matériau de base élastique souple, sur la surface intérieure (2) de laquelle sont formées plusieurs saillies de guidage (10) disposées les unes derrière les autres dans la direction longitudinale (5) de la bande sans fin (1),
- les saillies de guidage (10) étant formées d'un matériau qui comprend une rigidité plus élevée par rapport au matériau de base,
- les saillies de guidage (10) étant pourvues respectivement d'une plaque (7) disposée sur la surface intérieure (2) et transversalement à la direction longitudinale (5), laquelle plaque est formée d'un matériau comprenant une rigidité plus élevée par rapport au matériau de base,
- respectivement une saillie de guidage (10) étant conçue en une seule pièce avec respectivement une plaque (7), **caractérisée en ce que**
- les plaques (7) sont fixées directement, par liaison directe du matériau avec le matériau de base, sur la bande sans fin (1) par un procédé de moulage par injection à deux composants.

2. Chenille selon la revendication 1, **caractérisée en ce que** les plaques (7) s'étendent sur au moins la moitié de la largeur b de la chenille perpendiculairement à la direction longitudinale (5) de la bande sans fin (1).

3. Chenille selon la revendication 1 ou 2, **caractérisée en ce que** les plaques (7) s'étendent sur l'ensemble de la largeur b perpendiculairement à la direction longitudinale (5) de la bande sans fin (1).

4. Chenille selon l'une quelconque des revendications 1 à 3, **caractérisée en ce que** les plaques (7) voisines sont disposées parallèlement les unes aux autres à distance e égale les unes des autres et sont reliées les unes aux autres par une section articulée (9) élastique souple.

5. Chenille selon la revendication 4, **caractérisée en ce que** la distance e de la section articulée (9) correspond au moins à une demi-largeur c d'une plaque (7) sur la base de la saillie de guidage (10).

6. Chenille selon l'une quelconque des revendications 1 à 5, **caractérisée en ce que** la bande sans fin (1) comprend sur sa surface extérieure (3) des nervures profilées (4), qui s'étendent sur la largeur b ainsi que perpendiculairement à la direction longitudinale (5) de la bande sans fin (1), une nervure profilée (4) étant associée à une arête (11) d'une plaque (7).

7. Chenille selon la revendication 6, **caractérisée en ce que** la distance a des nervures profilées (4) est égale à la distance e des plaques (7) voisines.
